(19)

Europäisches Patentamt
European Patent Office
Office européen des brevets

(11) EP 4 145 356 A1

(12) EUROPEAN PATENT APPLICATION

(43) Date of publication:
08.03.2023 Bulletin 2023/10

(21) Application number: 22175660.4

(22) Date of filing: 26.05.2022

(51) International Patent Classification (IPC):
G06N 5/00 (2006.01)          G06N 20/20 (2019.01)

(52) Cooperative Patent Classification (CPC):
G06N 20/20; G06N 5/01

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.09.2021 PT 2021117437

(71) Applicant: Feedzai - Consultadoria e Inovação
Tecnológica, S.A.
3030-199 Coimbra (PT)

(72) Inventors:
• GARCIA BELÉM, CATARINA
3030-199 COIMBRA (PT)
• FERREIRA DA CRUZ, ANDRÉ MIGUEL
3030-199 COIMBRA (PT)
• DOS SANTOS SALEIRO, PEDRO
3030-199 COIMBRA (PT)
• SANTOS RODRIGUES BIZARRO, PEDRO
GUSTAVO
3030-199 COIMBRA (PT)

(74) Representative: Patentree
Edificio Net
Rua de Salazares, 842
4149-002 Porto (PT)

(54) CONSTRAINED OPTIMIZATION FOR GRADIENT BOOSTING MACHINES

(57) The present disclosure relates to a constrained optimization computer-implemented method for gradient boosting machines. In various embodiments, a process for constrained optimization for sequential error-based additive machine learning models (e.g., gradient boosting machines) includes configuring a sequential error-based additive machine learning model, receiving training data, and using one or more hardware processors to train the sequential error-based additive machine learning model using the received training data. The training includes performing optimization iterations to minimize a loss function that includes a fairness constraint, where the fairness constraint is based at least in part on disparities between groups.

Fig. 2

Description

## TECHNICAL FIELD

The present disclosure relates to a constrained optimization computer-implemented method for gradient boosting machines. In various embodiments, a process for constrained optimization for sequential error-based additive machine learning models (e.g., gradient boosting machines) includes configuring a sequential error-based additive machine learning model, receiving training data, and using one or more hardware processors to train the sequential error-based additive machine learning model using the received training data. The training includes performing optimization iterations to minimize a loss function that includes a fairness constraint, where the fairness constraint is based at least in part on disparities between groups.

## BACKGROUND

Artificial intelligence, including machine learning, is becoming increasingly used in or integrated into computer programs. For example, sequential error-based additive models such as gradient boosted decision trees (GBDT) work well for tabular data tasks. Algorithmic bias arises when a machine learning model displays disparate predictive and error rates across sub-groups of the population, hurting individuals based on ethnicity, age, gender, or any other potentially sensitive attribute. Conventional GBDT algorithms typically suffer from bias and discriminatory decision-making. Algorithmic fairness is an emerging field aimed at studying and mitigating discrimination in the decision-making process across protected sub-groups. However, existing algorithmic fairness methods are either inapplicable to GBDT, incur significant train time overhead, or may require access to sensitive attributes at inference time.
These facts are disclosed in order to illustrate the technical problem addressed by the present disclosure.

## GENERAL DESCRIPTION

The present disclosure relates to a constrained optimization computer-implemented method for gradient boosting machines, comprising the following steps:

configuring a sequential error-based additive machine learning model;
receiving training data; and
using one or more hardware processors to train the sequential error-based additive machine learning model using the received training data including by performing optimization iterations to minimize a loss function that includes a fairness constraint, wherein the fairness constraint is based at least in part on disparities between groups.

In an embodiment, the fairness constraint includes at least one of: predictive equality, equality of opportunity, or demographic parity.
In an embodiment, the loss function includes a performance constraint selected based at least in part on a value of a target metric computed from a confusion matrix.
In an embodiment, the target metric includes at least one of: a false positive rate, a true positive rate, an alert rate, an accuracy, or a precision.
In an embodiment, the fairness constraint is user-specified.
In an embodiment, the fairness constraint includes a proxy metric.
In an embodiment, the proxy metric is a sub-differentiable upper-bound of a metric derived from a confusion matrix.
In an embodiment, the proxy metric includes a cross-entropy-based function that upper-bounds a stepwise function.
In an embodiment, the sequential error-based additive machine learning model includes a gradient boosting machine and performing the optimization iterations includes, for each iteration:

calculating pseudo-residuals, wherein the pseudo-residuals is a gradient of the loss function with respect to predictions;
constructing a decision tree based at least in part on the calculated pseudo-residuals;
adding the decision tree to an ensemble of decision trees; and
updating the loss function using at least one violation of another fairness constraint, wherein the other fairness constraint does not include the proxy metric and the fairness constraint is a proxy for the other fairness constraint.

In an embodiment, the method may further comprise initializing a prediction, initializing the ensemble of decision trees, and selecting a proxy metric.

In an embodiment, the method may further comprise outputting the ensemble of decision trees.

In an embodiment, calculating pseudo-residuals includes calculating a direction of disparities.

In an embodiment, the method may further comprise outputting a randomized classifier based at least in part on the ensemble of decision trees.

In an embodiment, updating the loss function using at least one violation of another fairness constraint includes maximizing the other fairness constraint.

Another aspect of the present disclosure relates to a system, comprising:

a processor configured to:

configure a sequential error-based additive machine learning model;
receive training data; and
train the sequential error-based additive machine learning model using the received training data including by performing optimization iterations to minimize a loss function that includes a fairness constraint, wherein the fairness constraint is based at least in part on disparities between groups; and
a memory coupled to the processor and configured to provide the processor with instructions.

In an embodiment, the fairness constraint includes at least one of: predictive equality, equality of opportunity, or demographic parity.

In an embodiment, the loss function includes a performance constraint selected based at least in part on a value of a target metric computed from a confusion matrix.

In an embodiment, the fairness constraint includes a proxy metric.

In an embodiment, the sequential error-based additive machine learning model includes a gradient boosting machine and performing the optimization iterations includes, for each iteration:

calculating pseudo-residuals, wherein the pseudo-residuals is a gradient of the loss function with respect to predictions;
constructing a decision tree based at least in part on the calculated pseudo-residuals;
adding the decision tree to an ensemble of decision trees; and
updating the loss function using at least one violation of another fairness constraint, wherein the other fairness constraint does not include the proxy metric and the fairness constraint is a proxy for the other fairness constraint.

Another aspect of the present disclosure relates to a computer program product embodied in a non-transitory computer readable medium and comprising computer instructions for:

configuring a sequential error-based additive machine learning model;
receiving training data; and
using one or more hardware processors to train the sequential error-based additive machine learning model using the received training data including by performing optimization iterations to minimize a loss function that includes a fairness constraint, wherein the fairness constraint is based at least in part on disparities between groups.

## BRIEF DESCRIPTION OF THE DRAWINGS

The following figures provide preferred embodiments for illustrating the disclosure and should not be seen as limiting the scope of invention.

**Figure 1** is a flow diagram illustrating an embodiment of a process for providing constrained optimization for gradient boosting machines using data-dependent metrics.

**Figure 2** is a flow diagram illustrating an embodiment of a process for training a sequential error-based additive machine learning model.

**Figure 3** is a block diagram illustrating an embodiment of a system for providing constrained optimization for gradient boosting machines using data-dependent metrics.

**Figure 4** shows examples of proxy metrics for the False Positive Rate (FPR). Convex and (sub-)differentiable surrogates for FPR are shown.

**Figure 5** is a block diagram illustrating an embodiment of a system for fraud detection.

## DETAILED DESCRIPTION

The present disclosure relates to a constrained optimization computer-implemented method for gradient boosting machines. In various embodiments, a process for constrained optimization for sequential error-based additive machine learning models (e.g., gradient boosting machines) includes configuring a sequential error-based additive machine learning model, receiving training data, and using one or more hardware processors to train the sequential error-based additive machine learning model using the received training data. The training includes performing optimization iterations to minimize a loss function that includes a fairness constrained, where the fairness constraint is based at least in part on disparities between groups.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Tabular data is a common data format in various applications of machine learning such as security or fraud detection applied to transactional data. Gradient boosted decision trees (GBDT) (sometimes called "gradient boosting machines") work well for tabular data tasks. Examples of fast, scalable, and ready-to-use GBDT variants include LightGBM and XGBoost. However, conventional implementations of GBDT algorithms are typically unable to satisfy fairness requirements because there is a lack of bias mitigation methods for GBDT.

One type of algorithmic fairness method (also called Fair ML) relies on fairness constraints to prevent a machine learning model from disproportionately hurting protected groups. Using constrained optimization, in-processing techniques optimize for the predictive performance of fair models. For example, in-processing bias mitigation techniques such as TensorFlow Constrained Optimization (TFCO) are only compatible with neural network models, while Fairlearn exponentiated gradient (EG) reduction supports GBDT models but is impractical due to its substantial training overhead. Fairlearn EG is also incompatible with applications such as fraud detection because its output is a binary score, which is not suitable for deployment settings with a fixed budget for positive predictions (e.g., resource-constrained problems) or settings targeting a specific point in the ROC curve (e.g., fixed false positive rate).

The disclosed techniques provide a framework for constrained optimization for sequential error-based additive machine learning models. An example of a constraint is parity of group-wise error rates (e.g., to increase fairness), and an example of a sequential error-based additive machine learning model is a GBDT. In various embodiments, a framework for fairness constrained optimization tailored for GBDT is provided (sometimes called FairGBM). For example, the learning framework is for training GBDT under fairness constraints.

In various embodiments, the method of Lagrange multipliers is applied to gradient-boosting, requiring only the gradient of the constraint with respect to the model's output $\hat{Y}$. Lagrange duality enables this optimization process to be performed efficiently as a two-player game: one player minimizes the loss with respect to $\hat{Y}$ (which includes proxy metrics), while the other player maximizes the loss with respect to the Lagrange multipliers (which does not include the proxy metrics and uses only the original metrics). Since fairness metrics are typically non-differentiable, a "proxy-Lagrangian" formulation using sub-differentiable error rate proxies (e.g., sigmoid, or hinge) is employed to enable gradient-based optimization. In other words, because fairness metrics are typically non-differentiable, differentiable proxy constraints are used.

In various embodiments, fairness constraint fulfillment is supported at a specific target metric, such as false positive rate (FPR) or false negative rate (FNR) (finding fair models that fulfill restrictions on the number of allowed false positives or the number of allowed false negatives), an alert rate, an accuracy, a precision, or the like. The disclosed techniques increase fairness while maintaining predictive performance and using less memory and train time compared with conventional techniques. Unlike conventional techniques, the disclosed techniques do not require training extra models or keeping the training iterates in memory. Consequently, fewer computing resources are used while meeting predictive performance expectations.

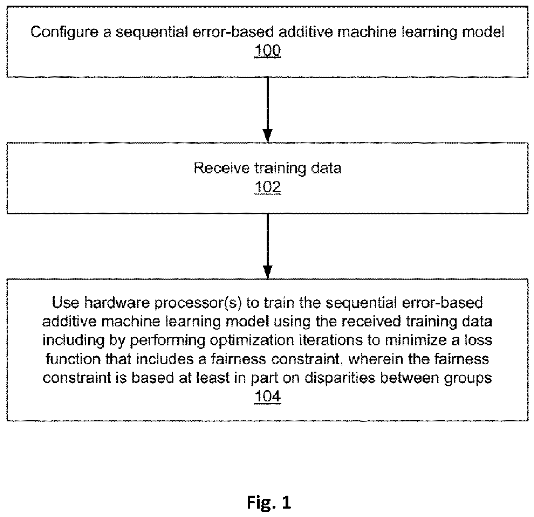

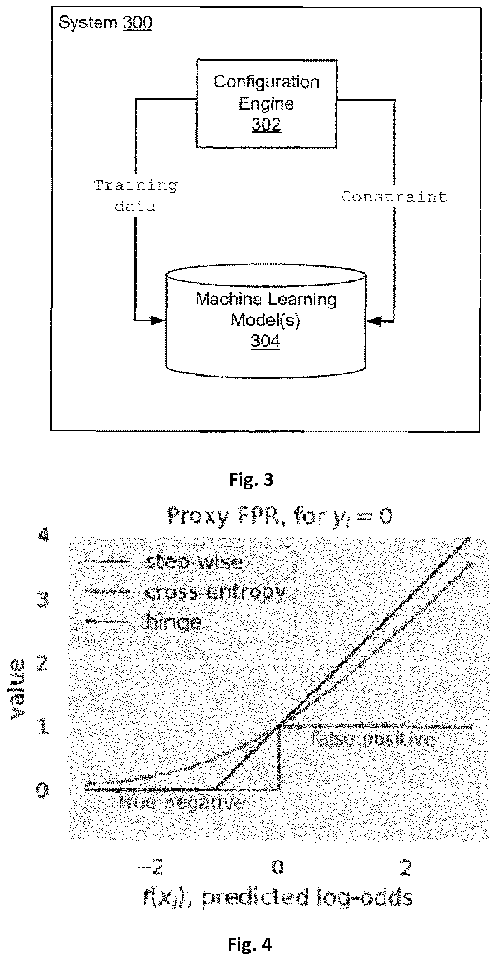

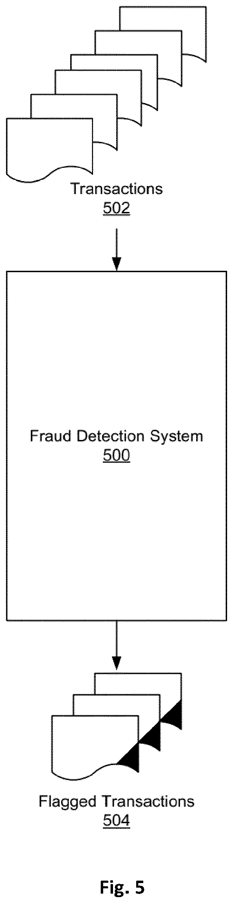

FIG. 1 is a flow diagram illustrating an embodiment of a process for providing constrained optimization for gradient boosting machines using data-dependent metrics. This process may be implemented on or performed by the system of FIG. 3 or FIG. 5. An example of a gradient boosting machine is machine learning model 304 of FIG. 3. Although the examples described herein use gradient boosting machines or GBDTs, this is not intended to be limiting as the disclosed techniques find application in any type of sequential error-based additive machine learning model and/or algorithm (sometimes simply called a "model").

In the example shown, the process begins by configuring a sequential error-based additive machine learning model (100). The model is configured to predict a decision result while meeting one or more constraints. In various embodiments, a proxy metric is used to approximate a fairness constraint, so the model will predict a decision result while approximately meeting the fairness constraint. For example, the model receives a transaction as input, analyzes the transaction, and outputs a prediction of whether the transaction is fraudulent or not, while avoiding unnecessarily discriminating based on some aspect of the transaction.

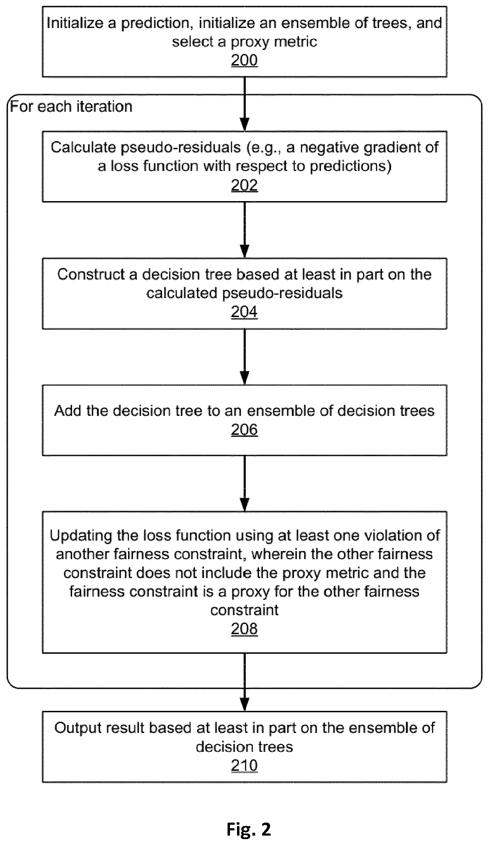

In various embodiments, configuring the model includes at least one of: initializing a prediction, initializing an ensemble of trees, and selecting a proxy metric. The prediction can be an average of dataset labels from training data as further described with respect to FIG. 2. An ensemble of trees is fitted to errors from the predictions and improves over subsequent iterations to make predictions by meeting a loss function. The proxy metric can be selected to ensure a fairness metric is met, as further described herein.

The process receives training data (102). In various embodiments, the training data is labeled data in which labels for the decision task are manually generated by humans or generated automatically (e.g., based on specified mapping rules). For example, with respect to fraud detection, the training data may include a plurality of transactions (e.g., purchases) for which features of each transaction, e.g., purchase information such as number of items purchased, shipping address, etc. are received by the machine learning model as inputs as well as a fraud decision label for each transaction. In other words, each transaction is known a priori to be either fraudulent or non-fraudulent and is labeled as such in order to train the model to correctly make fraud decisions based on the inputs.

The process uses one or more hardware processors to train the sequential error-based additive machine learning model using the received training data including by performing optimization iterations to minimize a loss function that includes a fairness constraint, wherein the fairness constraint is based at least in part on disparities between groups (104). Any type of hardware processor or group of hardware-based computing nodes can be used to train a machine learning model.

In various embodiments, the machine learning model is trained to perform the decision task based on labels. The training can update an already deployed model or be performed before the model is deployed. Optimization iterations improve the performance (e.g., classification, detection ability) of the machine learning model. An example of a process for performing optimization iterations is further described with respect to FIG. 2.

Minimizing a loss function means the model is performing well to make predictions. Unlike a conventional GBDT that minimizes a loss function without regard for fairness, the disclosed model is trained to minimize a loss function subject to at least one fairness constraint, so the loss function is referred to as including a constraint based at least in part on fairness disparities between groups. Various types of loss functions can be used, and which loss function(s) to use depend on the nature of the task. The loss function may include a fairness constraint, an example of which is further described with respect to Equation 2. As further described herein, fairness can be defined in a variety of ways and the fairness constraint may be specified by a user or otherwise programmed to reflect a desired definition of fairness. The fairness constraint may include a proxy metric. The loss function may include a performance constraint, an example of which is further described with respect to Equation 6. Some examples of constraints and proxy metrics are further described with respect to FIG. 4 and Table 1.

An example of how to train a sequential error-based additive machine learning model is further described with respect to FIG. 2.

FIG. 2 is a flow diagram illustrating an embodiment of a process for training a sequential error-based additive machine learning model. This process may be implemented on or by the system shown in FIG. 3 or FIG. 5.

The process begins by initializing a prediction, initializing an ensemble of trees, and selecting a proxy metric (200). The prediction may be based on an average and can be initially made without knowing the entity or other information about a specific transaction. For example, in a fraud detection scenario in which a training data set has 100 transactions of which 1 is fraudulent, then the prediction about an incoming transaction would be legitimate 1% of the time and fraudulent 99% of the time. As described herein, the ensemble of trees will be updated during the training process to improve prediction while meeting fairness constraints. Fairness constraints may be captured or approximated by a proxy metric, some examples of which are further described with respect to FIG. 4 and Table 1.

The process calculates pseudo-residuals (202). In various embodiments, the process uses a proxy-Lagrangian constrained optimization method with cross-entropy-based proxies of fairness constraints. In various embodiments, the loss function is represented by Equation 1 below

$$\tilde{\mathcal{L}}(f, \lambda) = L(f) + \sum_{i=1}^{m} \lambda_i \tilde{c}_i(f)$$

(1)

where $L$ is a predictive loss function, $\tilde{c}_i$ are the proxy inequality constraints given by Equation 2, $m$ is the number of constraints, and $\lambda \in \mathbb{R}_+^m$. The solution to the constrained optimization problem that aims to minimize the predictive loss $L(f)$ subject to $m$ constraints $\tilde{c}_i(f) \leq 0$ lies on an equilibrium point (or a saddle-point) of Equation 1. This solution could be found by gradient descent over the model function, $f$, and ascent over the Lagrange multipliers, $\lambda$.

In various embodiments, a conventional loss function for GBDTs is $L(f)$. By contrast, the disclosed techniques add the term $\sum_{i=1}^{m} \lambda_i \tilde{c}_i(f)$ to the loss function, which means the loss function takes fairness into consideration. For each of $\mathcal{L}$, $L$, $c_i$, $l$ there is a corresponding proxy counterpart $\tilde{\mathcal{L}}$, $\tilde{L}$, $\tilde{c}_i$, $\tilde{l}$ obtained by substituting at least one performance metric $l(y, f(x))$ by a sub-differentiable proxy metric $\tilde{l}(y, f(x))$. The descent step for the model player uses $\tilde{\mathcal{L}}$, the proxy-Lagrangian; and the ascent step for the $\lambda$-player uses $\mathcal{L}$, the Lagrangian with the original constraints (i.e., conventional fairness constraints based on a confusion matrix instead of the proxy constraints used in $\tilde{\mathcal{L}}$). This is expected to converge to a coarse-correlated equilibrium. This solution corresponds to a mixed strategy for the model player, defined as a distribution over all $f_t$ iterates, $t \in [1, T]$, where $T$ is the number of optimization iterations of the model, i.e., the number of trees in the ensemble. That is, for each input $x$, $t \in [1, T]$ is first randomly sampled, and then $f_t$ is used to make the

$$f_t = \sum_{m=0}^{t} \eta_m h_m$$

prediction for $x$, where ⟶ . $h_m$ is the m-th base learner (or m-th tree) and $\eta_m$ is the "shrinkage" or learning rate applied to the m-th base learner. The ensemble includes a total of T base learners or trees.

In various embodiments, the fairness constraint in Equation 1 is implemented using the set of $m = |S|$ inequalities in Equation 2:

$$\tilde{c}_b(f) = \max_{a \in S} \tilde{L}_{S_a}(f) - \tilde{L}_{S_b}(f) \leq \epsilon, \forall b \in S$$

(2)

where $\tilde{L}_{S_s}$ is the proxy loss measured over the samples that belong to group s, and $\epsilon \in R$ is the allowed constraint violation.

The pseudo-residuals refer to a negative of a gradient of a loss function with respect to model predictions. Calculating the pseudo-residuals indicates how to change the model to improve the loss function. A gradient of a Lagrangian with respect to multipliers is calculated as shown in Equation 4. This calculates the direction of disparities (e.g., who is being discriminated against). The multipliers in Equation 1 act as weights/prices on the constraints. These weights get updated according to Equation 4, which equals the constraint violations of the original constraints, $c_i(f)$. In other words, the loss function corresponding to Equation 1 is updated based on violations of a fairness constraint as described in Equation 4. The new loss function accounts for fairness unlike loss functions in conventional GBDT algorithms. A loss function is updated using at least one violation of another fairness constraint including by maximizing the other fairness constraint. For example, the loss function is increased if the current prediction of a transaction increases a metric of discrimination against a particular group. In other words, in each optimization iteration, a step is performed in the opposite direction of the gradient represented by Equation 3 and a step is performed in the direction of the gradient represented by Equation 4. In this example, the gradient in Equation 4 differs from the gradient in Equation 3 in that a proxy metric is used in Equation 3 but the original metric is used in Equation 4.

$$g_i = \frac{\partial \tilde{\mathcal{L}}(f(x_i), \lambda)}{\partial f(x_i)}$$

(3)

$$\Delta = \frac{\partial \mathcal{L}(f(x_i), \lambda)}{\partial \lambda} \qquad (4)$$

The process constructs a decision tree based at least in part on the calculated pseudo-residuals (204). That is, the process fits a tree to the pseudo-residuals (negative gradients). The tree learns the difference for specific features, creating a split in the feature space to learn how much to change the prediction to make a correct prediction (where the prediction matches the label). This is represented by Equation 5 below.

$$h_t = \arg\min_{h_t \in \mathcal{H}} \sum_{i=1}^{N} (-g_{t,i} - h(x_i))^2 \qquad (5)$$

The process adds the decision tree to an ensemble of decision trees (206). The updated ensemble of decision trees makes a better prediction and/or meets fairness constraints better. In various embodiments, the process outputs or otherwise makes available the ensemble of decision trees so that they may be used to make predictions. For example, the model is considered trained and ready to be deployed when the ensemble of decision trees is updated after the number of optimization iterations has been completed (e.g., met a threshold).

The process updates the loss function using at least one violation of another fairness constraint, wherein the other fairness constraint does not include the proxy metric and the fairness constraint is a proxy for the other fairness constraint (208). For example, the other fairness constraint is given by Equation 6. The fairness constraint is referred to as a proxy for the other fairness constraint because pseudo-residuals are calculated without using the other fairness constraint in various embodiments. Referring briefly to FIG. 4, examples of the fairness constraint are the cross-entropy and hinge curves, while the step-wise curve is the other fairness constraint.

The process outputs a result based at least on the ensemble of decision trees (210). For example, the process outputs the ensemble of decision trees themselves or another result such as a randomized classifier based on the ensemble of decision trees. The ensemble of trees or the randomized classifier can be used to process input (e.g., a transaction) and output a decision (e.g., whether the transaction is classified as fraudulent) subject to a fairness constraint.

FIG. 3 is a block diagram illustrating an embodiment of a system for providing constrained optimization for gradient boosting machines using data-dependent metrics. In the example shown, system 300 includes a configuration engine 302 and one or more machine learning models 304 (collectively referred to as "models"). Examples of models 304 include sequential error-based additive machine learning models such as GBDTs. The configuration engine is adapted to configure the models and facilitate training of the models by performing the process of FIG. 1. For example, the configuration engine 302 provides a constraint such as a constraint based at least in part on fairness disparities between groups to the models 304. The configuration engine 302 provides training data to the models 304 in various embodiments. The configuration engine may be part of or received information from a fraud detection platform. For example, a dashboard or other user interface allows a user to specify desired fairness constraints, performance objectives, provide training data, etc.

FIG. 4 shows examples of proxy metrics for the False Positive Rate (FPR). Convex and (sub-)differentiable surrogates for FPR are shown. As described herein, the disclosed techniques use a proxy metric to approximate a fairness constraint. In various embodiments, a proxy metric is a sub-differentiable upper-bound of a metric derived from a confusion matrix. The proxy metric may include a cross-entropy-based function that upper-bounds a stepwise function, some examples of which are shown in Table 1. Referring to FIG. 4, the proxy metric is the curve labeled "cross-entropy," which upper-bounds the curve labeled "step-wise." Conventional techniques sometimes use a hinge-based proxy (also shown in FIG. 4). A hinge-based proxy has a discontinuous derivative, which is different from the disclosed cross-entropy-based proxy, which has a continuous derivative. The cross-entropy-based proxy is similar to cross-entropy loss.

As a fundamentally subjective concept, there is no "one-size-fits-all" definition of fairness. Nonetheless, popular fairness notions can be defined as equalizing rate metrics across sensitive attributes. For example, equality of opportunity is defined as equalizing recall, when measured over members of specific protected groups (e.g., different genders or ethnicities). In the general case, a model $f$ is deemed fair with respect to a sensitive attribute $S$ and some rate metric $l$ if the expected value of $l$ is independent of the value of $s \in S$, as represented by Equation 6. In various embodiments, Equation 6 is a relatively strict constraint so proxy constraints that are not as strict may be used. For example, Equation 6 is evaluated using the empirical averages of $L(f)$ as shown in Equation 7, where $\mathcal{D}$ is the set of all training samples, $S_s$ is the set of all training samples belonging to group $s \in S$, and $\varepsilon \in \mathbb{R}$ is a small pre-selected allowed deviation. As such, Equation 2 is a proxy for Equation 7.

$$E_{x,y}[L(f)] = E_{x,y}[L(f)|S = s], \forall s \in S \qquad (6)$$

$$c_s(f) = L_\mathcal{D}(f) - L_{S_s}(f) \le \epsilon, \forall s \in S \qquad (7)$$

Equation 6 can be viewed as an equality constraint (non-proxy constraint) in the model's training process after replacing expectations under the data distribution by their sample averages. However, as discussed herein, common fairness notions (i.e., common choices of $L$) are non-convex and non-differentiable. Therefore, in order to find a solution to this constrained optimization problem, a proxy metric $\tilde{L}$ that is differentiable is used.

A performance constraint can be selected based on a target metric computed from the confusion matrix. For example, if the target metric is 5% FPR, a threshold would be set so that the FPR for all groups is 5%. Equalizing FPR among sensitive attributes is also known as predictive equality. As any function of the confusion matrix, the FPR takes in predictions binarized using a stepwise function. In various embodiments, a cross-entropy-based proxy function that upper-bounds the stepwise function is used. For example, the cross-entropy-based proxy function is of the form $\log(1 + e^{f(x)+k})$ for label negative samples, or $\log(1 - e^{f(x)+k})$ for label positive samples. Given a fairness constraint c, the constraint can be fulfilled by solving the constrained optimization problem using a proxy upper-bound $\tilde{c}$, such that $c(\theta) \le \tilde{c}(\theta) \le 0$.

Table 1 shows examples of instance-wise rate metrics used to compose fairness metrics and the proxy counterparts.

| Name | Instance-wise metric, $l_i$ | Proxy metric, $\tilde{l}_i$ | $\dfrac{\partial \tilde{l}_i}{\partial f(x)}$ Proxy derivative, | Fairness metric |
|---|---|---|---|---|
| False Positive | $\mathbb{I}[0 = y \ne \hat{y}]$ | $\mathbb{I}[y = 0] \cdot \log(1 + e^{f(x)})$ | $\mathbb{I}[y = 0] \cdot \sigma(f(x))$ | Predictive equality |
| False Negative | $\mathbb{I}[1 = y \ne \hat{y}]$ | $\mathbb{I}[y = 1] \cdot \log(1 + e^{-f(x)})$ | $\mathbb{I}[y = 1] \cdot [\sigma(f(x)) - 1]$ | Equality of opportunity |
| Predicted Positive | $\mathbb{I}[1 = \hat{y}]$ | $\log(1 + e^{f(x)})$ | $\sigma(f(x))$ | Demographic parity |
| Predicted Negative | $\mathbb{I}[0 = \hat{y}]$ | $\log(1 + e^{-f(x)})$ | $\sigma(f(x)) - 1$ | Demographic parity |
| $\sigma$ is the sigmoid function, $f(x)$ is the predicted log-odds of instance x, and $\hat{y} \in \{0, 1\}$ is the binarized predictions | | | | |

As further described herein, the constraint can be selected based on fairness. For example, a fairness evaluation metric can be specified or defined by a user/stakeholder. The fairness evaluation metric can be provided in a variety of ways such as received via a graphical user interface, loaded from a file, looked up in a database/user profile storage depending on the user case or user, etc. The fairness evaluation metric may vary depending on a use case. The disclosed techniques accommodate any fairness evaluation metric.

Fairness can be defined in a variety of ways and is domain dependent and subjective. Fairness in a given decision-making process may be defined as the lack of bias and prejudice. Fairness metrics can be subdivided as measuring group or individual fairness. Individual fairness measures the degree to which similar individuals are treated similarly, and is based on similarity metrics on the individuals' attributes. On the other hand, group fairness aims to measure disparate treatment between protected (or underprivileged) and unprotected (or privileged) groups (e.g., across different races, age groups, genders, or religions).

Some examples of fairness constraints include:

- Demographic parity: the likelihood of a positive or negative outcome should be conditionally independent of whether the individual is in the protected group;
- Equalized odds: equal true positive rates and equal false positive rates across subgroups;
- Equality of opportunity: equal true positive (or false negative) rates across subgroups;
- Predictive equality: equal false positive (or true negative) rates across subgroups;
- Accuracy equality: prediction accuracy should be equal across protected groups;
- Balance for the positive class: the expected score for a positively classified individual is equal across groups; and

- Balance for the negative class: the expected score for a negatively classified individual is equal across groups.

FIG. 5 is a block diagram illustrating an embodiment of a system for fraud detection. The fraud detection system 500 is an example of a system that may be configured to perform the disclosed techniques to make predictions subject to constraints such as fairness constraints. This is not intended to be limiting, as the disclosed techniques may be applied to any system that processes tabular data and uses sequential error-based additive machine learning models.

Fraud detection system 500 receives transactions 502 and processes the transactions to determine actions (if any) to take with respect to the transactions. For example, if the fraud detection system determines that a transaction is potentially fraudulent, the system outputs an alert about one or more transactions 504 that are potentially fraudulent to have the transaction(s) be blocked or reviewed further.

In various embodiments, fraud detection system 500 is designed to detect fraud and similar security breaches in online transactions such as purchases. In a typical scenario, a fraudster obtains a payment instrument (such as by using a credit card skimmer at a point of sale device) and then tries to make unauthorized purchases using that payment instrument. Sometimes the legitimate cardholder detects the illicit usage and requests a chargeback or otherwise initiates a dispute to be reimbursed. Sometimes a merchant, credit card issuer, bank, or other entity involved in transaction processing uses a fraud detection system such as fraud detection system 500 to detect and prevent fraudulent transactions.

The effectiveness of a fraud detection system depends on its ability to quickly and accurately detect and prevent a fraudster from successfully completing a purchase or transaction. An effective fraud detection system preferably detects the fraud prior to a legitimate cardholder reporting the fraud or some other financial loss to a merchant, credit card issuer, bank, or other entity involved in the transaction. Ideally, the fraudster is thwarted by having the payment instrument declined when they try to use it. In addition, a fraud detection system can be designed to be fair while effectively detecting fraud by not discriminating between groups or some other measure of fairness as described herein. For example, the fraud detection system does not reject transactions from one group (e.g., race-based for example) more often than from other groups.

Fraud detection system 500 receives transactions 502, makes predictions about the transactions such as whether they are fraudulent or legitimate, and outputs one or more flagged transactions 504. The flagged transactions 504 may be those that are potentially fraudulent, so the fraud detection system may forward them to a human or automated analyst, who investigates the transaction and makes a final decision about what action to take.

Unlike conventional fraud detection systems which do not account for fairness, system 500 accurately and efficiently makes predictions while meeting fairness constraints. System 500 is configured to perform the disclosed techniques including the process of FIG. 1. The disclosed techniques can be implemented by system 500 to better recognize fraudulent transactions and/or legitimate transactions while meeting fairness constraints.

A fairness-aware variant of a gradient-boosting training framework (sometimes called) FairGBM has been described herein. The disclosed techniques minimize predictive loss while enforcing group-wise parity on one or more error rates. The disclosed techniques find application in GBDT algorithms, which use regression trees as the base weak learners. Example GBDT variants include XGBoost and LightGBM. For simplicity of illustration, a fairness-aware implementation of LightGBM has been described. However, the techniques are generalizable to any gradient-boosting algorithm, and to any set of differentiable constraints (not limited to fairness constraints). Although the examples focus on binary groups, FairGBM can be used to achieve fairness over any number of overlapping or disjoint sub-groups.

The disclosed techniques provide a constrained optimization (CO) framework for the GBDT algorithm, dubbed FairGBM. The process can be thought of as a non-zero sum two player game formulation with differentiable proxies of popular fairness rate metrics. In various embodiments, a randomized classifier implemented by the disclosed techniques converges to an approximately optimal solution. Moreover, FairGBM does not require significant extra computational resources, while related CO algorithms considerably increase training time (Fairlearn EG) or memory consumption (TFCO). In one aspect, FairGBM models effectively extend the Pareto frontier on both datasets, occupying a previously empty region of the fairness-performance trade-off. In another aspect, fairness constraint fulfillment is enabled at a specified ROC point (e.g., with a fixed budget for false positives), which is a common requirement in deployed ML models.

Experimental results show that the disclosed techniques achieve state-of-the-art fairness-performance trade-offs. The disclosed techniques have been validated on Fair ML benchmark dataset as well as a real-world fraud detection task. More specifically, high fairness with little to no impact on predictive performance can be achieved compared to unconstrained LightGBM. Experimental results using a literature benchmark dataset as well as on a real-world account opening fraud case-study show that FairGBM performs better than LightGBM for a wide range of fairness-performance trade-offs, or otherwise significantly increases fairness at a tiny performance drop (+0.585 fairness, -0.011 performance, for $\alpha = 0.95$ on an account opening fraud dataset). Moreover, FairGBM consistently achieves very high fairness fulfillment (above 0.9) for any trade-off choice. When compared with general-purpose constrained optimization methods, the disclosed techniques are more consistent across datasets, and achieve higher fairness for the same level of performance.

Although the foregoing embodiments have been described in some detail for purposes of clarity of understanding, the invention is not limited to the details provided. There are many alternative ways of implementing the invention. The disclosed embodiments are illustrative and not restrictive.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the systems described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

**Claims**

1. A computer-implemented method, comprising the following steps:

   configuring a sequential error-based additive machine learning model;
   receiving training data; and
   using one or more hardware processors to train the sequential error-based additive machine learning model using the received training data including by performing optimization iterations to minimize a loss function that includes a fairness constraint, wherein the fairness constraint is based at least in part on disparities between groups.

2. The method according to claim 1, wherein the fairness constraint includes at least one of: predictive equality, equality of opportunity, or demographic parity.

3. The method according to any of the previous claims, wherein the loss function includes a performance constraint selected based at least in part on a value of a target metric computed from a confusion matrix.

4. The method according to claim 3, wherein the target metric includes at least one of: a false positive rate, a true positive rate, an alert rate, an accuracy, or a precision.

5. The method according to any of the previous claims, wherein the fairness constraint comprises a proxy metric.

6. The method according to claim 5, wherein the proxy metric is a sub-differentiable upper-bound of a metric derived from a confusion matrix.

7. The method according to claim 6, wherein the proxy metric includes a cross-entropy-based function that upper-bounds a stepwise function.

8. The method according to claim 5, wherein the sequential error-based additive machine learning model includes a gradient boosting machine and performing the optimization iterations includes, for each iteration:

   calculating pseudo-residuals, wherein the pseudo-residuals is a gradient of the loss function with respect to predictions; preferably wherein calculating pseudo-residuals includes calculating a direction of disparities;
   constructing a decision tree based at least in part on the calculated pseudo-residuals;
   adding the decision tree to an ensemble of decision trees; and

updating the loss function using at least one violation of another fairness constraint, wherein the other fairness constraint does not include the proxy metric and the fairness constraint is a proxy for the other fairness constraint; preferably wherein updating the loss function using at least one violation of another fairness constraint includes maximizing the other fairness constraint.

9. The method according to claim 8, further comprising initializing a prediction, initializing the ensemble of decision trees, and selecting a proxy metric.

10. The method according any of the claims 8-9, further comprising outputting the ensemble of decision trees or outputting a randomized classifier based at least in part on the ensemble of decision trees.

11. A system, comprising:
a processor configured to:

configure a sequential error-based additive machine learning model;
receive training data; and
train the sequential error-based additive machine learning model using the received training data including by performing optimization iterations to minimize a loss function that includes a fairness constraint, wherein the fairness constraint is based at least in part on disparities between groups; and
a memory coupled to the processor and configured to provide the processor with instructions.

12. The system according to claim 11, wherein the fairness constraint includes at least one of: predictive equality, equality of opportunity, or demographic parity.

13. The system according to any of the claims 11-12, wherein the loss function includes a performance constraint selected based at least in part on a value of a target metric computed from a confusion matrix.

14. The system according to any of the claims 11-13, wherein the sequential error-based additive machine learning model includes a gradient boosting machine and performing the optimization iterations includes, for each iteration:

calculating pseudo-residuals, wherein the pseudo-residuals is a gradient of the loss function with respect to predictions;
constructing a decision tree based at least in part on the calculated pseudo-residuals;
adding the decision tree to an ensemble of decision trees; and
updating the loss function using at least one violation of another fairness constraint, wherein the fairness constraint includes a proxy metric, the other fairness constraint does not include the proxy metric and the fairness constraint is a proxy for the other fairness constraint.

15. A computer program product embodied in a non-transitory computer readable medium and comprising computer instructions for:

configuring a sequential error-based additive machine learning model;
receiving training data; and
using one or more hardware processors to train the sequential error-based additive machine learning model using the received training data including by performing optimization iterations to minimize a loss function that includes a fairness constraint, wherein the fairness constraint is based at least in part on disparities between groups.

Configure a sequential error-based additive machine learning model
100

Receive training data
102

Use hardware processor(s) to train the sequential error-based additive machine learning model using the received training data including by performing optimization iterations to minimize a loss function that includes a fairness constraint, wherein the fairness constraint is based at least in part on disparities between groups
104

**Fig. 1**

Initialize a prediction, initialize an ensemble of trees, and select a proxy metric
200

For each iteration

Calculate pseudo-residuals (e.g., a negative gradient of a loss function with respect to predictions)
202

Construct a decision tree based at least in part on the calculated pseudo-residuals
204

Add the decision tree to an ensemble of decision trees
206

Updating the loss function using at least one violation of another fairness constraint, wherein the other fairness constraint does not include the proxy metric and the fairness constraint is a proxy for the other fairness constraint
208

Output result based at least in part on the ensemble of decision trees
210

**Fig. 2**

**Fig. 3**

**Fig. 4**

Transactions
502

Fraud Detection System
500

Flagged Transactions
504

**Fig. 5**

# EP 4 145 356 A1

Europäisches Patentamt
European Patent Office
Office européen des brevets

## EUROPEAN SEARCH REPORT

Application Number

EP 22 17 5660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | V. PERRONE ET AL.: "Fair Bayesian Optimization", ARXIV.ORG, CORNELL UNIVERSITY LIBRARY, 201 OLIN LIBRARY CORNELL UNIVERSITY ITHACA, NY 14853, 1 February 2021 (2021-02-01), XP081871680, * sections 2 to 4, appendices A and B * | 1-15 | INV. G06N5/00 G06N20/20 |
| X | A. COTTER ET AL.: "Optimization with Non-Differentiable Constraints with Applications to Fairness, Recall, Churn, and Other Goals", ARXIV.ORG, CORNELL UNIVERSITY LIBRARY, 201 OLIN LIBRARY CORNELL UNIVERSITY ITHACA, NY 14853, 12 September 2018 (2018-09-12), XP081190159, * sections 1, 3.4 and 4 * | 1-15 | |
| X | A. AGARWAL ET AL.: "A Reductions Approach to Fair Classification", ARXIV.ORG, CORNELL UNIVERSITY LIBRARY, 201 OLIN LIBRARY CORNELL UNIVERSITY ITHACA, NY 14853, 6 March 2018 (2018-03-06), XP081239967, * sections 2 to 4 * | 1-15 | TECHNICAL FIELDS SEARCHED (IPC) G06N |
| X | H. ZHANG ET AL.: "OmniFair: A Declarative System for Model-Agnostic Group Fairness in Machine Learning", PROCEEDINGS OF THE 2021 INTERNATIONAL CONFERENCE ON MANAGEMENT OF DATA, 9 June 2021 (2021-06-09), pages 2076-2088, XP058532838, DOI: 10.1145/3448016.3452787 ISBN: 978-1-4503-8343-1 * sections 1 to 5 * | 1-15 | |

The present search report has been drawn up for all claims

| Place of search | Date of completion of the search | Examiner |
|---|---|---|
| The Hague | 11 November 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16